# EUROPEAN PATENT APPLICATION

(11) **EP 3 015 087 A1**
(43) Date of publication of application: **04.05.2016**
(21) Application number: 15003008.8
(22) Date of filing: 21.10.2015
(51) Int. Cl.: A61C 8/00

(54) **DENTAL IMPLANT**

(30) Priority: 29.10.2014 ES 201431582
(71) Applicant: Vogul, S.L.U. (Company), 08022 Barcelona (ES)
(72) Inventor: Gil Mur, Javier, 08022 Barcelona (ES); Padrós Roldán, Roberto, Andorra LA Vella (ES); Lázaro Calvo, Pedro José, Andorra LA Vella (ES); Herrero Climent, Mariano, Andorra LA Vella (ES); Cordero Acosta, Juan Luis, Andorra LA Vella (ES); Martínez López, Jordi, Andorra LA Vella (ES)
(74) Representative: Diaz Nunez, Joaquin

(57) **Abstract**

Dental implant comprising a body (1) provided with an external thread (11) and a head (2); comprising said head (2): - at least a frustoconical outer portion (21) with an increasing section, starting from the upper end of the head (2) and having a tapering (A) comprised between 6° and 20° and a height (h1) comprised between 0.5 mm and 2.0 mm; and - a blind axial housing, in which there are defined: a frustoconical inner section (22), with a decreasing section, starting from the upper end of the head (2) and having a tapering (B) comprised between 15° and 30° and a height (h2) comprised between 0.5 mm and 2.0 mm; a middle section (23) for coupling an actuating tool; and a lower threaded section (24) intended to receive an anchor screw of a dental prosthesis.

## Description

### Object of the invention.

The object of the present invention is a dental implant that comprising a body provided with an external thread for attaching to maxillary bones and ending at the top in a head with an axial housing for attaching an anchor screw for the dental prosthesis has, specifically in regards to the head of the implant, characteristics oriented in achieving a better adhesion and osteoblastic growth and reducing bacterial filtration by eliminating or limiting the passage of germs.

### Field of application of the invention.

This invention is directed to the dental sector.

### State of the art.

For years, there are different patents of dental implants that are intended to cover the loss of a tooth.

The implants are usually designed to receive a dental prosthetic attachment. Internal cone implants are those that, designed to be attached to maxillary bones, have in their upper end or head a blind axial hole, comprising a cone-shaped section wherein an internally threaded area is often provided, designed for a corresponding stud or bolt that is provided for this purpose in the dental prosthesis to be screwed therein.

Various backgrounds related to dental implants and having characteristics oriented in resolving various technical problems are also known.

Specifically, the document ES-2276528_T3 describes a dental implant having in its outer surface first and second axial sections with circumferentially-oriented roughness and adapted in use to provide the same or substantially the same pitch.

The mentioned implant has in its coronal area a socket to receive an abutment structure comprising said hollow structure a conical coronal section, an internally-threaded apical section and a cylindrical intermediate section.

The document EP2119414B1 (ES 2 415 737 T3) describes a coupling of a multipart dental implant system wherein the dental implant is provided with guiding and lock means for associating the dental implant to an abutment comprising a first conically tapered section, a second section with grooves and a third substantially circular cylindrical section; having the first section a tapering comprised between 7 and 9 degrees and preferably 8 degrees.

The document WO2008128756A2 describes a dental implant and dental connection components, connection elements the aim of which is to shape an improved platform to provide advantageously a robust anti-rotational structure to resist rotation and provide an indexing function between a mating component and the dental implant while also providing an enhanced seal between the mating component and the implant. Another objective of said background is that the connection platform can accommodate various types of clinical indications such that the implant can be used to support both single dental restorations as well as implant supported bridges or dentures.

The implant involved comprises an inner conical chamber that forms, with the axis of the implant, an angle between 10° and 20°, i.e. with a tapering comprised between 20° and 40° in order to improve the coupling.

The mentioned background as well as the other implants in the market, have the disadvantage of not incorporating appropriate solutions to avoid the bacterial filtration and micro-mobility generated by chewing forces, especially when lateral efforts occur.

### Description of the invention.

the dental implant object of this invention, being of the type described in the precharacterizing part of the first claim, has some constructive particularities with regard to the head thereof, aimed at resolving the outlined problems both in regards to the passage of germs and bacterial filtration and to solve the problems of micro-mobility and achieve a better adhesion and osteoblastic growth.

The dental implant of the invention is of the type comprising a body provided with an external thread for attaching to maxillary bones and ending at the top in a head, which comprises:
- a frustoconical outer portion with an increasing section and starting from the upper end of the head
- a blind axial housing, wherein there are defined: a frustoconical inner section, with a decreasing section, starting from the upper end of the head; a middle section for coupling an actuating tool and also for inserting a prosthetic attachment, and a lower threaded section suitable to receive an anchor screw of a dental prosthesis intended to be strongly attached;

In accordance with the invention, and in order to resolve the technical problem, the frustoconical inner section of the implant head has a tapering comprised between 15° and 30° and in this case in particular 20° and a height comprised between 0.5 mm and 2.0 mm

The frustoconical outer portion of the implant head has in turn a tapering comprised between 6° and 20°, and in this case in particular between 8° and 14° and a height comprised between 0.5 mm and 2.0 mm, the mentioned frustoconical outer portion can have in all or part of its extension threads or grooves with a width of valley comprised between 0.15 mm and 0.45 mm.

The above characteristics of the implant head are associated to a number of advantages, mainly achieving a better adhesion and osteoblastic growth due to the length and tapering of the frustoconical outer portion of the implant head. Such frustoconical outer portion can occur in three versions: with threads, grooves, or smooth.

The internal conical connection plays a very important role, since it improves the stability of the prosthesis due to the length of the frustoconical inner section while the tapering of said frustoconical inner section has a direct relationship with the bacterial filtration, by eliminating or limiting the passage of germs.

The relationship of the frustoconical inner section in terms of angle and length is critical since when the frustoconical inner section is very short in height does not represent a sufficiently high barrier for bacteria, and when said frustoconical inner section has a tapering greater than 30° does not have guarantees of stability in the prosthesis when this receives lateral chewing loads.

Therefore, when the tapering of the frustoconical inner section is set at 20° and the height exceeds one millimeter in length, a good antibacterial seal and good stability prosthetic are achieved.

### Description of the drawings.

In order to complement the description that is being carried out and with the object to help to a better understanding of the characteristics of the invention, a set of drawings is accompanied to the present specification, in which, with an illustrative and non-limiting character, the following has been represented:
- Figure 1 shows a perspective view of an exemplary embodiment of a dental implant according to the invention.
- Figure 2 shows an elevation view of the implant in Figure 1.
- Figure 3 shows a section of the dental implant in the previous figures in its vertical median plane.
- Figure 4 shows an elevation view of a variant of embodiment of the dental implant in the previous figures, provided with perimeter grooves in the frustoconical outer portion and an enlarged detail of a portion thereof.

### Preferred embodiment of the invention.

The dental implant depicted in the attached figures comprises a body (1) that ends at the top in a head (2).

The mentioned body (1) is provided with an external thread (11) for attaching to a maxillary bone of the user.

The head (2) comprises a frustoconical outer portion (21) with an increasing section and starting from the upper end of the head (2).

The mentioned frustoconical outer portion (21) has a tapering (A) comprised between comprised between 8° and 14°, and a height (h1) comprised between 0.5 mm and 2.0 mm.

The head (2) of the implant comprises a blind axial housing, wherein there are defined: a frustoconical inner section (22), with a decreasing section, starting from the upper end of the head; a middle section (23) for an eventual coupling of an actuating tool; and a lower threaded section (24) intended to receive an anchor screw (not shown) of a dental prosthesis.

The mentioned frustoconical inner section (22) has a tapering (B) comprised between 15° and 30°, and a height (h2) comprised between 0.5 mm and 2.0 mm.

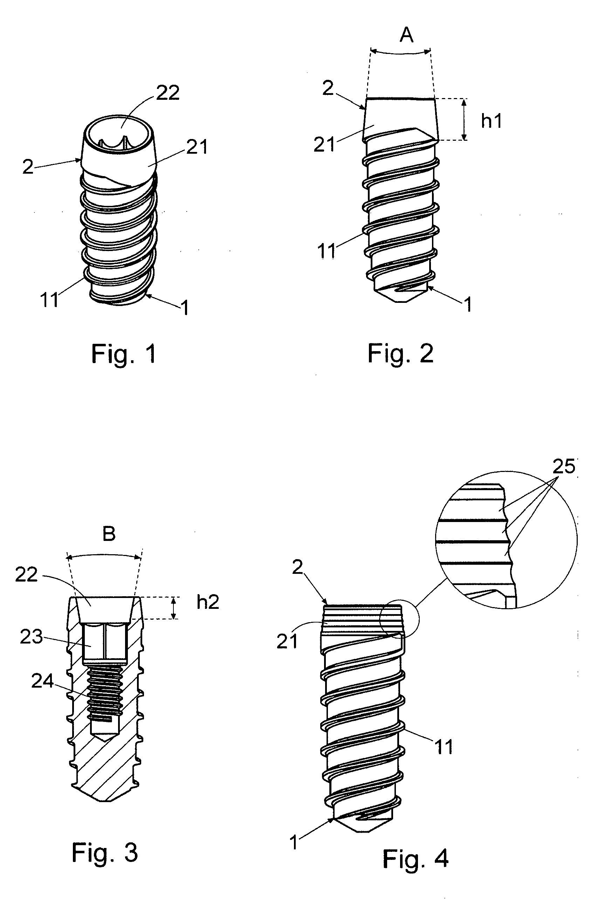

The frustoconical outer portion (21) of the implant head can be smooth, as shown in Figures 1 to 3, or have threads or grooves (25) with a width of valley comprised between 0.15 mm and 0.45 mm, as shown in Figure 4.

Having sufficiently described the nature of the invention as well as a preferred embodiment thereof, it is stated for all intents and purposes that the materials, shape, size and arrangement of the elements described may be modified provided this does not entail altering the essential features of the invention which are claimed below.

## Claims

1. Dental implant, comprising a body (1) provided with an external thread (11) for attaching to maxillary bones and ending at the top in a head (2) comprising: - at least a frustoconical outer portion (21) with an increasing section and starting from the upper end of the head (2); and - a blind axial housing, in which there are defined: a frustoconical inner section (22), with a decreasing section, starting from the upper end of the head (2); a middle section (23) for coupling an actuating tool; and a lower threaded section (24) intended to receive an anchor screw of a dental prosthesis; **characterized in that:** the frustoconical inner section (22) has a tapering (B) comprised between 15° and 30° and a height (h2) comprised between 0.5 mm and 2.0 mm; and the frustoconical outer portion (21) has a tapering (A) comprised between 6° and 20° and a height (h1) comprised between 0.5 mm and 2.0 mm.

2. Dental implant, according to claim 1, **characterized in that** the frustoconical outer portion (21) has threads or grooves (25) with a width of valley comprised between 0.15 mm and 0.45 mm.

3. Dental implant, according to claim 1, **characterized in that** the tapering (A) of the frustoconical outer portion (21) is preferably comprised between 8° and 14°.
